# EUROPEAN PATENT APPLICATION

(11) **EP 1 203 615 A1**
(43) Date of publication of application: **08.05.2002**
(21) Application number: 01114719.6
(22) Date of filing: 21.06.2001
(51) Int. Cl.: B01J 19/12

(54) **Continuous process and apparatus for preparing inorganic materials employing microwave**

(30) Priority: 03.11.2000 KR 2000065245
(71) Applicant: KOREA RESEARCH INSTITUTE OF CHEMICAL TECHNOLOGY, Daejeon 305-343 (KR)
(72) Inventor: Park, Sang-Eon, Yusung-ku, Daejeon (CO); KIM, Dae Sung, Yusung-ku, Deajeon (CO); Chang, Jong-San, Yusung-ku, Daejeon (CO); Kim, Ji-Man, Yusung-ku, Deajeon (CO)
(74) Representative: Reinhard - Skuhra - Weise & Partner

(57) **Abstract**

This invention relates to a continuous microwave synthesis process of inorganic materials and its apparatus and more particularly, to the process of synthesizing inorganic materials prepared in a manner such that after preparing a mixed solution of precursor materials for various inorganic materials such as porous molecular sieve, layered compounds and ceramics, this mixed solution is continuously added to a tube-type microwave reactor using a slurry pump for the synthesis and crystallization of inorganic materials. Thus the manufacturing process of this invention has the following advantages: (1) the reaction time is further shortened by several to tens of minutes for crystallization, compared to the conventional hydrothermal reaction requiring a prolonged time, (2) the continuous manufacturing and collection processes of this invention can give access to mass-scale production of inorganic materials with relatively small facility, compared to the conventional batch hydrothermal or microwave synthesis, and (3) less amount of organic templating agent can be required during the manufacture of porous molecular sieve.

## Description

### BACKGROUND OF THE INVENTION

### Field of the Invention

This invention relates to a continuous process and apparatus for preparing inorganic materials employing microwaves and more particularly, to the process for preparing inorganic materials prepared in a manner such that after preparing a mixed precursor solution for various inorganic materials such as porous molecular sieve, layered compounds, ceramics and the like, this mixed solution is continuously added to a tube-type microwave reactor through a slurry pump for synthesis and crystallization of inorganic materials. Thus, the manufacturing process of this invention provides the following advantages: (1) the reaction time is further shortened by several to tens of minutes for crystallization, compared to the conventional hydrothermal reaction requiring a prolonged time, (2) the continuous manufacturing and collection processes of this invention can give access to mass-scale production of inorganic materials with relatively small facility, compared to the conventional batch hydrothermal or microwave synthesis, and (3) less amount of organic templating agents can be required during the manufacture of porous molecular sieve.

### Description of the Prior Art

Since porous molecular sieve with a three-dimensional pore structure, which is represented by zeolite, have a variety of characteristics such as a very high surface area, molecular-size pore, cationic exchange and solid acid, they permits versatile industrial applications. In particular, the petroleum industry has frequently used the porous molecular sieve as catalysts, carrier and adsorbent, while it has been also regarded as an extremely important material for a detergent builder in the related industry. Recently, various researches for these materials have focused on a substantial number of fields such as selective removal of radioactive material, semiconductor, electric cell, chemical sensor, laser and permeation-selective film.

In general, zeolite is being synthesized through the crystallization process from an aqueous solution under hydrothermal conditions, but due to a prolonged time for crystallization, a batch process has been adopted for the manufacture of zeolite.

The prolonged time for crystallization requires more large-scale facility, thus resulting in a lot of investment expenditures to meet the mass production of porous molecular sieve. In this context, the shortening of synthesis time, among other things, is essential to reduce the manufacturing cost.

Hitherto, the cases for shortening the synthesis time of zeolite have been reported. For example, a patented invention related to a continuous synthesis process for synthetic zeolite and its apparatus has been disclosed; this technology, so characterized by a circulating fluidized bed preparation apparatus, a stationary segregation chamber, a solid-liquid separator and a fluidity bed dryer, is designed to automatically control the reaction conditions such as temperature, time and agitation [Japanese patent No. 10-324518]. However, this process has a restricted application to shorten the reaction time due to the fact that zeolite is basically synthesized by a hydrothermal crystallization.

Further, Bekkum et al. of the Netherlands have reported improved results in shortening the reaction time based upon the continuous synthesis of zeolite using a coil-type stainless steel tube reactor, even though they have adopted the process of a hydrothermal crystallization [Proc. 12^{th} International Zeolite Conference (Materials Research Society), vol. III. pp. 1253 (1999)].

As such, an apparatus for hydrothermal crystallization should adopt a batch reactor to meet more prolonged time of crystallization process, let alone inevitably enormous investment outlays incurred out of the mass production of porous molecular sieve due to the required large-scale facility.

As part of shortening the prolonged crystallization time that the hydrothermal crystallization has basically faced, a microwave synthesis process for zeolite has been recently introduced. A microwave radiation process is not to induce the heat conduction by specimen from the outer heat source, but to ensure a totally homogeneous heating to any specimen. The reaction mechanism for crystallization of inorganic materials via microwave radiation has not been clearly elucidated up to now, but it has been reported that the microwave radiation process for zeolite may be superior to the hydrothermal synthesis. The hydrothermal process has recognized some disadvantages in that when the reactants are heated by an outer oven, more prolonged time is required for thermal convection and heat conduction transferred to a synthetic solution and for crystallization process. In contrast, the microwave synthesis may contribute to a homogeneous formation of seed and to shortening the crystallization time, since a homogeneous heating is available in the reaction solution in a reactor.

In principle, the crystallization time can be shortened by the fast dissolution of zeolite synthesis gel under microwave radiation, while the synthesis time under microwave radiation can be also shortened by the rapid increase of temperature of the synthetic solution and better heat transfer. The reason why the rapid crystallization of zeolite synthetic solution under the radiation of microwave lies in the activation of water and ions presented in the synthetic solution. More specifically, the rapid oscillation of ions and rapid rotation of dipoles in water by microwaves are induced and this causes the frequent friction among molecules in the solution, thus resulting in the rapid increase of temperature and earlier crystallization in the long run.

Mobile Co. of U.S.A. has reported the first synthesis process for the porous molecular sieve under the microwave radiation [U.S. Patent No. 4,778,666]. The synthesis for zeolite is made available using the microwave energy in the range of 600-50000 MHz, most preferably in the range of 915-2450 MHz.

Further, zeolite ZSM-5 using its seed and NaA from zeolites solution are synthesized under microwave radiation in a sealed container (glass, ceramic, PTFE) under a certain pressure. In particular, the synthesis for zeolite is performed using liquid hydrocarbons (e.g., ethylene glycol) as a heat transfer material. Further, Bekkum et al. of the Netherlands has reported that zeolites Y and ZSM-5 are synthesized within tens of minutes in a Teflon container using microwave energy [Zeolites, 13, 162 (1993)]. They have suggested that unlike the typical hydrothermal synthesis that can produce undesirable crystal faces due to the prolonged period for crystallinity, the microwave synthesis can cope with the aforementioned shortcomings.

Other microwave synthesis processes for alumino phosphate (AlPO₄-5) and a crystalline framework structure incorporated with cobalt (CoAlPO₄-5 molecular sieve and mesoporous MCM-41 molecular sieve) have been reported [*J*. *Chem*. *Soc*. *Faraday Trans., 91,* 1163 (1995); Zeolites, *15*, 33 (1995): *Chem*. *Commun*., 925 (1996); *Catal*. *Today*, *44,* 301 (1999)]. Recently, Dwyer Group of U.K. has reported the synthesis of zeolite beta and hexagonal Y (EMT structure) and ZSM-5 under the radiation of microwave [*Stud. Surf. Sci. Catal*., 105, 181 (1997)]. In the case of ZSM-5, TiZSM-5 and AlZSM-5 having the form of NH₄ have been synthesized in the presence of fluorine anion, while zeolite Y can be synthesized within a short time in the absence of any crystalline impurities. Thus, it is fully understood that the microwave synthesis process is more advantageous for preparing crystallines with a very high purity and the time for the formation of seed and growth period of crystal can be further shortened.

In spite of the fact that the batch microwave synthesis apparatus can prepare inorganic materials within a short time, the facility for mass production of inorganic materials cannot be properly established.

Meantime, Baghrust et al. have observed the microwave effect in solution and reported that a specimen can be heated under the radiation of microwave up to 25°C using ethanol as organic solvent [*J*. *Chem. Soc.*, *Chem*. *Commun*., 674 (1992)].

As described above, intensive studies have been made around the world in an attempt to shorten the synthesis time of inorganic materials and their mass production but with little success. Under these circumstances, there is an urgent need for the development of a novel process towards the mass production of inorganic materials.

### SUMMARY OF THE INVENTION

To comply with the aforementioned shortcomings, the inventor et al. have made intensive studies to develop the process of applying microwave effect to the synthesis of various inorganic materials widely, as well as the shortening of synthesis time and the mass-scale production of inorganic materials. As a result, the inventor et al. have noted that when microwave with a certain range of output is radiated to a reactor simultaneously through the continuous addition of a mixed precursor solution of various inorganic materials into the tube-type reactor by a slurry pump, the prevention of thermal effect has the following advantages, compared to the conventional non-continuous microwave reactor: 1) more shortened synthesis time and further reduction in energy consumption, and 2) less amount of organic templating agents required for the synthesis of porous molecular sieve. In consequence this invention has consummated.

Therefore, an object of this invention is to provide a continuous microwave synthesis process of inorganic materials and its apparatus that can be effective in ensuring the mass-scale production of various inorganic materials in a more economical manner.

### Brief Descriptions of the Drawings

Fig. 1 is a structural view of continuous microwave synthesis apparatus;
Fig. 2a is a structural view of microwave reactor;
Fig. 2b is a structural view of both tube-type reactor and cylindrical reactor involved in a microwave reactor;
Fig. 3 is XRD of zeolite ZSM-5 synthesized according to this invention;
Fig. 4 is a SEM photograph of zeolite ZSM-5 synthesized according to this invention;
Fig. 5 is XRD of zeolite NaY synthesized according to this invention;
Fig. 6 is a XRD of mesoporous MCM-41 material synthesized according to this invention; and
Fig. 7 is a XRD of a layered compound synthesized according to this invention.

### Detailed Description of Preferred Embodiments

This invention is characterized by a continuous microwave synthesis of inorganic materials and its apparatus, wherein the inorganic materials using the microwave synthesis process comprises: the mixed solution of precursor for the synthesis of inorganic materials, so prepared, is continuously added to a tube-type reactor by a slurry pump, while the reactor is simultaneously subject to microwave energy.

Further, this invention is characterized by a continuous microwave synthesis of inorganic materials and its apparatus, wherein its structure comprises an injection tank of synthetic solution, a slurry pump and a microwave reactor equipped with a tube-type reactor and cylindrical reactor and microwave radiation device.

The preferred manufacturing process of this invention using the continuous microwave synthesis is explained in more detail by each reaction step as set forth hereunder.

The first reaction step is to perform the process of preparing a mixed solution of precursor material in an attempt to synthesize inorganic materials in an injection tank of synthetic precursor solution 10. Hence, examples of inorganic materials according to this invention include porous molecular sieve with three-dimensional pore structure, two-dimensional layered compounds and ceramics.

The porous molecular sieve is selected from the group consisting of the following materials: zeolite with a pore size of 3-15Å selected from alumino silicate, alumino phosphate and silicoalumino phosphate; transition metal-substituted zeolite; and, mesoporous materials such as silicate having a pore size of 15-150Å.

Further, when the crystal seed of 50-500 nanometers in size from the porous molecular sieve is contained to the synthetic solution in the range of 1-20 wt.% during the manufacture, the reaction time can be further shortened. Also, with the addition of a seed crystal mother liquid, less amount of tetrapropyl ammonium cation as an organic templating agent can be employed, compared to the conventional hydrothermal synthesis during the manufacture of alumino silicate ZSM-5.

Meantime, in the case of alumino silicate selected in the metals such as Ti, B, Ga, Mn and Fe, a ZSM-5 compound whose metals are incorporated in the structure can be prepared using the molar ratio of Si/(Ti, B, Ga, Mn and Fe) = 0.005-0.02. In the case of alumino phosphate, with the addition of nitrate containing 3 mol% of metals selected from Co, Mn and Fe, a metal alumino phosphate compound whose metals are incorporated in the structure can be also prepared.

Examples of the two-dimensional layered compound include bivalent metal cations such as magnesium, nickel and zinc; hydrotalcite based layered double hydroxides obtained from trivalent cations such as aluminum, lanthanum, chrome, manganese and iron; and, mixed metal oxides.

Examples of the ceramics include metal ferrite compounds containing zinc, nickel, manganese and cobalt; spinel oxide; and, perovskite.

In the next process, the mixed solution of precursor material, so formed, is continuously added to the reactor **31** by the slurry pump **20**, while a microwave energy of 60-1200 watt in output is simultaneously radiated to the reactor using the microwave radiation apparatus **33**, preferably in the range of 100-400 watt. More specifically, under the radiation of microwave, this process is designed to crystallize the continuously added reaction mixture contained in the reactor by the slurry pump within a short time. Hence, the radiation of less than 60 watt makes it slow to reach the desired reaction temperature and cause more weak crystallinity; in the case of exceeding 1,200 watt, however, the drastically increased pressure may result in explosion.

The continuous synthesis of inorganic materials according to this invention is effectively applied by microwave effect instead of thermal effect. Namely, the conventional microwave synthesis process has been performed based upon the rapid increase of temperature and thermal effect in a certain time profile. In contrast, the microwave synthesis process of this invention, the crystallization of inorganic materials may be made available within 5 minutes, since the thermal effect in a certain time profile is excluded through the rapid increase of temperature induced by microwave effect. Further, this invention has an advantage in that the formation of by-products can be prevented through a rapid cooling process.

The microwave reactor **30** is divided into the tube-type reactor **31** and cylindrical reactor **32**. A tube in the tube-type reactor has the following specification: outer diameter (1/16-1 inch, preferably 1/4-3/8 inches), length (1-50 meters) and Teflon. Hence, the formation rate and amount of inorganic materials can be controlled depending upon the changes in outer diameter/length of tube and injection rate.

Finally, the inorganic materials, so formed from the microwave reactor 30, are treated through a cooling bath **40**, a separation bath **50** and a dry apparatus 60 in a sequential order.

According to this invention, the continuous microwave synthesis of inorganic materials is a novel process through which a variety of inorganic materials can be synthesized within a short time, compared to the conventional batch synthesis. Further, this invention can be widely applied to the synthesis field of inorganic materials, since tremendous amounts of various inorganic materials are made available with significantly reduced process scale.

This invention herein is explained in more detail based on the following examples without limitations thereby.

### Example 1 : Synthesis of ZSM-5 molecular sieve

First, the seed-crystal mother liquid was prepared in the following manner:

61g of 20% tetrapropyl ammonium (TPAOH) solution, 62.4g of tetraorthosilicate (TEOS) and 60g of water were added to an injection tank of synthetic solution, stirred for well mixing and left at room temperature until the mixing solution became a clear solution. Hence, the molar ratio of active ingredients was TPAOH/SiO₂: H₂O/SiO₂ = 0.2 : 20. Then, the mixture was radiated at the temperature of 60-140°C for 30 minutes to 5 hrs under microwave. The mother liquid, so obtained in the reaction, was MFI-structure zeolite. At the result of measuring the particle size of zeolite in accordance with DLS (dynamic light scattering) process, it proven that the particle size was in the range of 50-500 nm. Further, when the crystallinity of the MFI-structure zeolite was ascertained based upon X-ray diffraction analysis, the zeolite was a crystallines.

Then, zeolite ZSM-5 was prepared using the aforementioned mother liquid of seed crystal in the following manner:

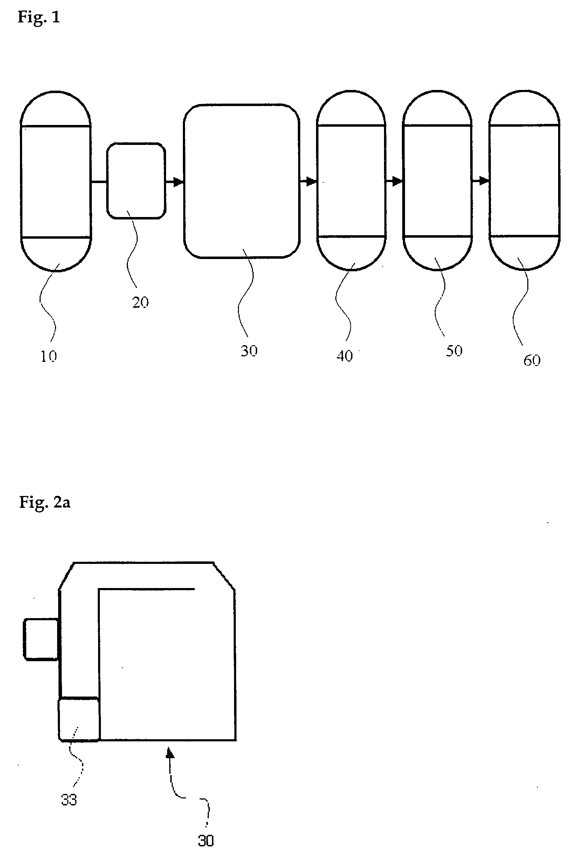

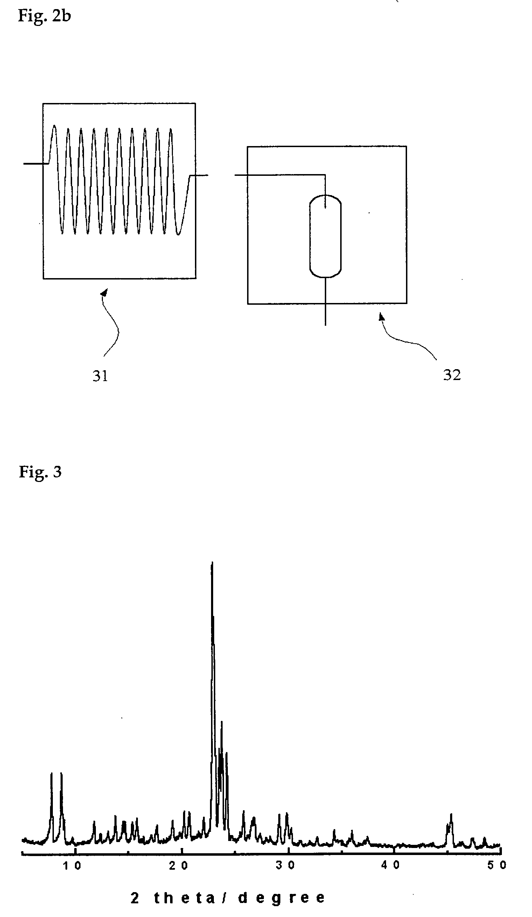

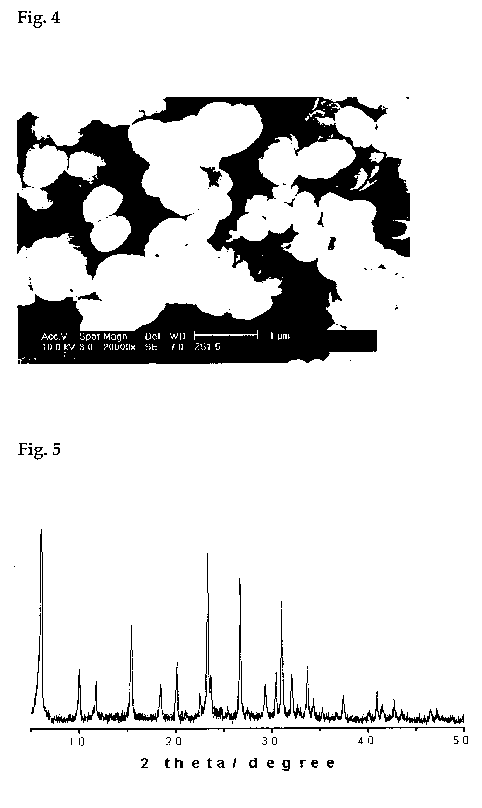

0.82g of sodium aluminate and 300g of water were added to the injection tank of synthetic solution and stirred until a clear solution was formed. 62.4g of TEOS was slowly added to the mixture dropwise and further stirred. 5 wt. % of the seed crystal mother liquid ZSM-5 (contents of silicate in the final synthetic materials, including 0.0175 mol of TPAOH), so prepared, was added to the resulting solution. Hence, the molar ratio of the active ingredients was Al/Si : NaOH/Si : H₂O/Si = 0.033 : 0.02599 : 55.6. With the lapse of about 30 minutes, the mixture was added to the reactor in a continuous microwave apparatus of this invention using a slurry pump and subject to a microwave having an output of 200 watt using a microwave radiation apparatus (1.5 kW, 2450 MHz), so fabricated directly by the inventor et al. There was no significant difference between the microwave radiation apparatus **33** of this invention and the conventionally used ones; provided, however, that the former apparatus is designed to be fabricated in a manner such that appropriate microwave radiation can be made available by the continuous synthesis reactor of this invention consisting of a tube-type reactor **31** and a cylindrical reactor **32**. More specifically, as revealed in Fig. 2a, the apparatus of this invention has two-type structures in which both of the tube-type reactor **31** and a cylindrical reactor **32** are inserted to a large cavity at right respectively, thus radiating microwave via the reactor from the microwave radiation apparatus **33** at left. Hence, while maintaining the pressure of 100 psi, the desired inorganic materials were continuously synthesized; an outer diameter of tube was in the range of 1/4-3/8 inches, and the length was 5 meters. Then, the crystallinity and formation of particles were investigated using an X-ray diffraction analysis and scanning electronic microcopy (SEM). The results were shown in Figs. 3-4.

According to this invention, Examples 1-2, 1-3 and 1-5 were conducted in the same manner as Example 1, except that the sizes of each seed crystal were different. Example 1-4 was conducted in the same manner as Example 1 using a seed crystal (including zero mol of TPAOH). Hence, 0.0175 mol of TPAOH templating agent was contained in the seed crystal mother liquid of Example 1-4, while the seed crystal of Example 1-1 was the material having zero mol where TPAOH templating agent was filtered off. Further, other detailed profiles (crystal size, output, etc.) and synthetic results (synthesis rate) were shown in the following table 1.

In particular, Example 1-5 was conducted in a manner such that with the addition of Ti in the molar ratio of 0.01 to Si in the mixed solution, a metal-substituted ZSM-5 compound was prepared in the structure.

### Comparative example 1: Noncontinuous synthesis of ZSM-5

ZSM-5 was non-continuously prepared in the following manner using the same mixed solution as Example 1-2: 30 minutes after the mixed solution was prepared, 60% of the solution was added to a tube-type Teflon reactor, the ZSM-5 was synthesized under the following reaction conditions using a microwave oven MDS-2000 (CEM Co., Pmax = 650 watt, 2450 MHz): output (600-300 watt, pressure (100 psi), temperature (165°C) and time (10 mins). The physical characteristics of the crystal, so obtained, were same as those of Example 1.

### Comparative example 2 : Noncontinuous synthesis of ZSM-5

The synthesis was conducted in the same manner as Comparative example 1, except that instead of aluminum source and seed-crystal mother liquid, tetrapropyl ammonium, a templating agent, was added to the mixing solution under the following reaction conditions: output (600-300 watt), pressure (100 psi), temperature (165°C) and time (150 mins).

### Comparative example 3 : Hydrothermal synthesis of ZSM-5

ZSM-5 was prepared by the hydrothermal synthesis using the same mixing solution as Examples 1-2.

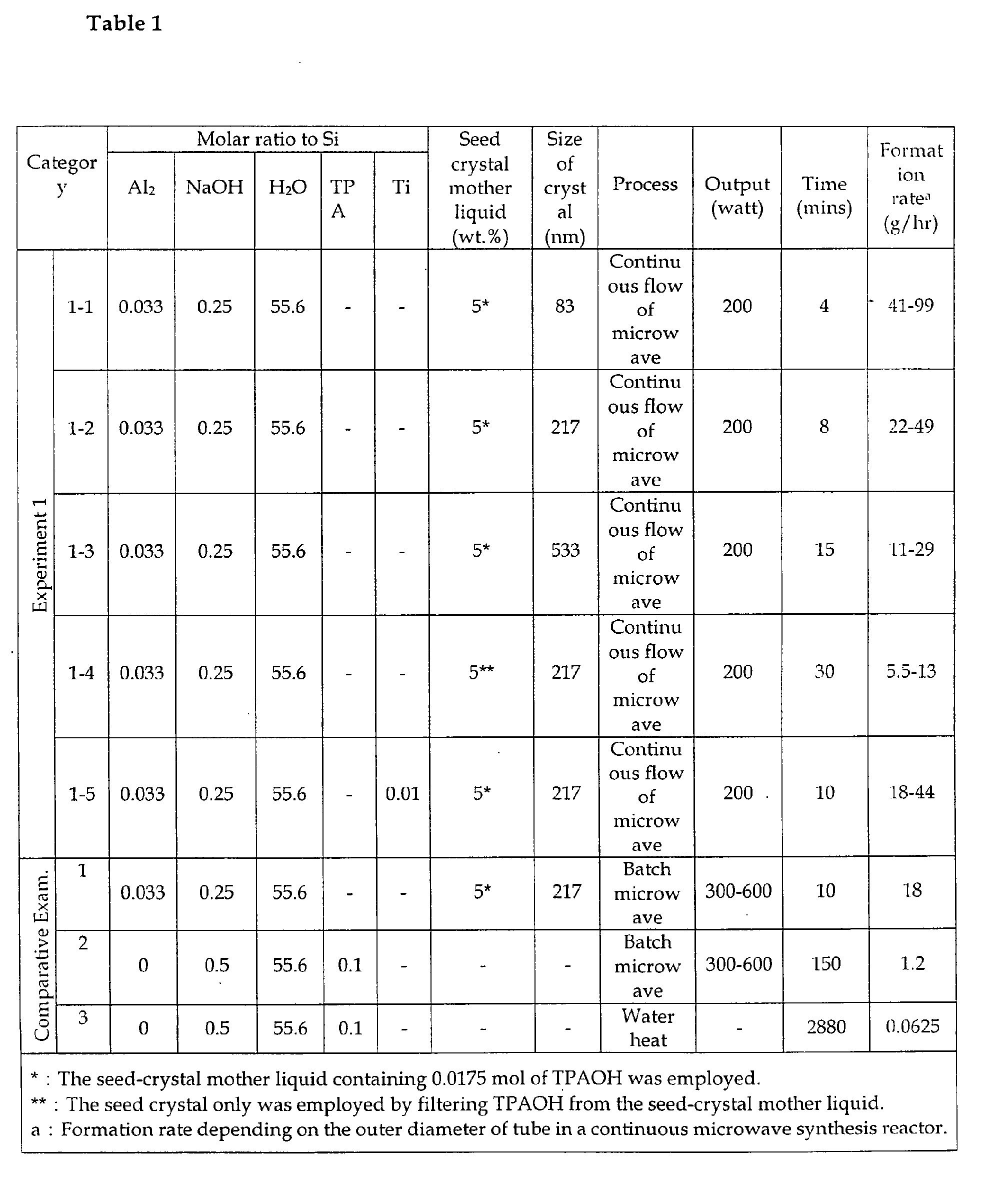

### Example 2 : Synthesis of NaY molecular sieve

5 A mixture of 1.2g of sodium hydroxide, 0.88g of aluminum nitrate and 52.7g of water was mixed under stirring. After the mixture was stirred until a transparent solution was formed, 7.8g of water glass was added to the mixing solution for 1 hr. Hence, the molar ratio of active ingredients was Al/Si : NaOH/Si : H₂O/Si = 0.2 : 0.1 : 100. Then, with the lapse of one hr, the synthesis of NaY molecular sieve was performed in the same manner as Example 1 using the above mixing solution; hence, the pressure was 90 psi at 150°C for 30 minutes. Further, as shown in Fig. 5, X-ray diffraction analysis designed to ascertain the crystallinity of inorganic materials indicated that NaY was duly synthesized.

### Comparative example 4 : Noncontinuous synthesis of NaY

A mixture of 1.2g of sodium hydroxide, 0.88g of aluminum nitrate and 52.7g of water was mixed under stirring. After the mixture was stirred until a transparent solution was formed, 7.8g of water glass was added to the mixing solution for 1 hr.

The solution, so obtained, was subject to a microwave oven with the output of 600-300 watt at 90 psi and 150°C for 30 minutes. The crystal structure was confirmed by X-ray diffraction pattern. Also, with the lapse of time, the formation of by-products was observed.

### Example 3 : Synthesis of MCM-41

This example was designed to improve the crystallinity of mesoporous material and control the particle size by using ethylene glycol as a heat transfer agent. A sodium silicate solution containing 15g of Ludox HS-40, a silica source and 2g of sodium hydroxide was slowly added dropwise to a mixed solution containing 25 wt.% of myristyltrimethyl ammonium bromide (5.6g, MTAB Aldrich) as a surfactant and 5g of ethylene glycol under stirring for 1 hr at room temperature. The total pH was adjusted at about 9-10 using a weak hydrochloric acid and obtained the desired inorganic material. In particular, in the case of a surfactant, the sizes of mesopore were changed using C₁₂₋₁₈. Hence, the molar ratio of active ingredients was C₁₄TMABr/NaOH/SiO₂ C₁₄TMABr/ethylene glycol : H₂O/SiO₂ = 0.167 : 0.5 : 0-0.2 : 40.5.

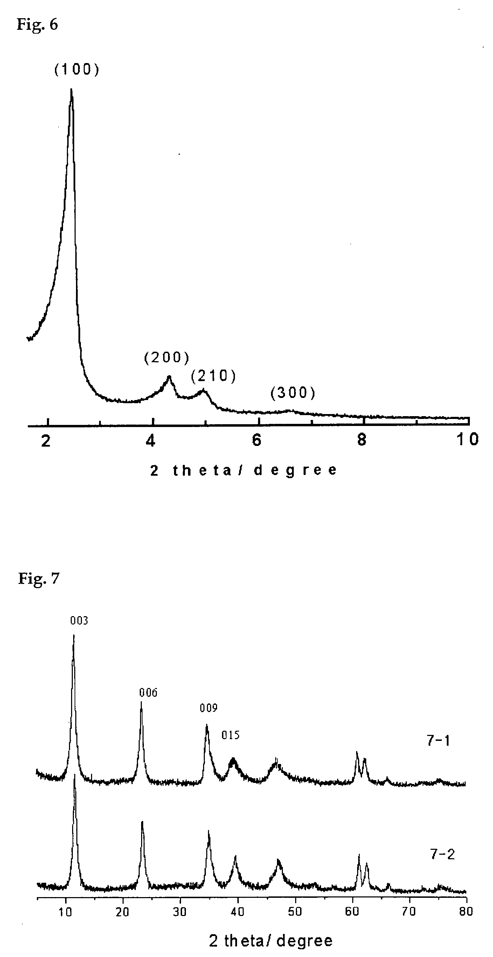

MCM-41 was synthesized within 40 minutes in the same manner as Example 1 using the above mixture, while maintaining the pressure 15 psi at 100°C. As a result of ascertaining the diffraction pattern of MCM-41 crystal structure by X-ray diffraction analysis in Fig. 6, one peak with strong intensity and three peaks with weak intensity were observed. Each peak could be expressed as 100, 200, 210 and 300 for convenience' sake. It was revealed that when the length of alkyl group in a surfactant was longer, d₁₀₀ value was further increased.

### Example 4 : Synthesis of VPI-5 molecular sieve

30g of pseudoboehmite as an aluminium source was dissolved in the two-thirds of distilled water (47g), while 57.6g of 85% phosphoric acid was also dissolved in the remaining one-third of distilled water (28g). The two solutions were slowly mixed. The mixture, so formed, was stirred at room temperature for 2 hrs until pH 1.5 was reached. Then, 50.5g of n-dipropylamine (DPA), a templating agent, was slowly added to the resulting solution. With the lapse of 2 hrs, the pH of gel was reached at 3.4. Hence, the molar ratio of active ingredients was H₂O/n-DPA : P₂O₅/Al₂O₃ : P₂O₅/n-DPA = 40 : 1 : 1. Thereafter, VPI-5 was synthesized within 30 minutes in the same manner as Example 1 using the above mixture, while maintaining the pressure 54 psi at 130°C. This material, so formed, showed a crystal structure of needle form and its surface area was 112m²/g.

### Example 5 : Synthesis of NaA molecular sieve

4g of sodium hydroxide was completely dissolved in 180g of distilled water, and with the addition of 6g of pseudoboehmite, the mixture was stirred for dissolving completely. 15g of Ludox HS-40 was slowly added dropwise to the resulting and stirred for about 1 hr. Hence, the molar ratio of active ingredients was H₂O/SiO₂: AL₂O₃ : NaOH/SiO₂ = 100-150 : 1 : 3. Thereafter, NaA was synthesized within 20 minutes in the same manner as Example 1 using the above mixture, while maintaining the pressure 15 psi at 100°C. As a result, the size of NaA crystal, so obtained, was in the range of 0.5-2µm.

### Example 6 : Synthesis of AlPO₄-5 molecular sieve

4.25g of pseudoboehmite as an aluminum source was added to 5g of 85% phosphoric acid dissolved in 11g of distilled water and stirred at room temperature for about 1 hr. Then, 36.8g of 20% tetraethyl ammonium hydroxide (TEAOH), a templating agent, was slowly added dropwise to the resulting solution and stirred for 4 hrs for homogeneous mixing. Hence, the molar ratio of active ingredients was H₂O/Al₂O₃ : H₂O/P₂O₅ : P₂O₅/TEAOH = 70 : 70 : 0.5. Further, each of 3 mol% of transition metals (Co, Mn and Fe) nitrate was added to the synthetic solution to prepare alumino phosphate compound where the three metals were incorporated into the structure of molecular sieve.

Thereafter, AlPO₄-5 was synthesized within 20 minutes in the same manner as Example 1 using the above mixture, while maintaining the pressure 115 psi at 170°C. As a result, it was revealed that the product, so obtained, had a AFI structure by X-ray diffraction pattern.

### Example 7-1: Synthesis of LDHs

This Example was intended to synthesize layered double hydroxides (LDHs), a layer-structure compound. 12.82g of magnesium nitrate was completely dissolved in 25g of distilled water, while 6.25g of aluminum nitrate was dissolved in 8.3g of distilled water. Then, 4.77g of sodium carbonate dissolved in 50g of water was slowly added dropwise to the two metal nitrate solutions and stirred. The mixing solution, so formed, was homogenized at 40°C and stirred for 2 hrs for further homogenization, while maintaining the pH at 10 with the addition of sodium hydroxide dropwise. Hence, the molar ratio of active ingredients was Mg²⁺,Ni²⁺,Zn²⁺/Al³⁺ : NaOH/Na₂CO₃ =3 : 0.5 : 8. Thereafter, LDHs was synthesized within 40 minutes in the same manner as Example 1 using the above mixture, while maintaining the pressure 1 psi at about 70°C. The X-ray diffraction pattern of Mg₃AlO₆, so synthesized, was shown in Fig. 7 using X-ray diffraction analysis.

### Example 7-2: Synthesis of LDHs

The synthesis was performed in the same manner as Example 7-1, except that Ni₃AlO₆ was prepared using nickel nitrated instead of magnesium nitrate. The X-ray diffraction pattern of Ni₃AlO₆, so synthesized, was shown in Fig. 7 using X-ray diffraction analysis.

### Example 8 : Synthesis of ferrite based NiFe₂O₄

The mixture of nickel nitrate and iron nitrate was completely dissolved in water in the ratio of 1:2. Then, the mixture was neutralized with ammonia water (35%) and adjusted the pH at 8-9. With the lapse of about 1 hr, NiFe₂O₄ was synthesized within 10 minutes in the same manner as Example 1 using the above mixture, while maintaining the pressure 100 psi at about 165°C. The surface area of the desired inorganic materials, so formed, was in the range of 70-250m²/g with the yield of 80-90%.

### Example 9 : Synthesis of BaTiO₃

100g of carbon dioxide-free distilled water was added to 8.5g of titanium (IV) isopropoxide hydrolyzed with hydrochloric acid (1 mol). The precipitate was washed by centrifugal separation to obtain titanium hydroxide. With the lapse of 10 minutes, 12.2g 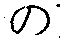 BaCl₂ • 2H₂O was added to the resulting solution and stirred for homogenizing. With the addition of 2g of sodium hydroxide, the mixture was stood for 20 minutes under the atmosphere of nitrogen. Thereafter, BaTiO₃ was synthesized within 25 minutes in the same manner as Example 1 using the above mixture, while maintaining the pressure 115 psi at about 170°C. The structure of BaTiO₃, so formed, was observed by X-ray diffraction pattern.

As described above, the continuous microwave synthesis of inorganic materials and its apparatus of this invention has the following advantages, since inorganic materials can be prepared with a short time in a manner such that microwave energy is radiated to a mixed solution of precursor material or of nano-structure seed: (1) the reaction time is further shortened by 1/10-1/50, compared to the conventional hydrothermal reaction, (2) the continuous manufacturing and collection processes of this invention can give access to mass-scale production of final products with relatively small facility, compared to the conventional batch hydrothermal or microwave synthesis, while less amount of organic templating agent can be required during the manufacture of porous molecular sieves, and (3) the manufacturing process of this invention can be widely utilized in the mass-scale production of various inorganic materials due to the simple process.

## Claims

1. A continuous microwave synthesis of inorganic materials and its apparatus, wherein the inorganic materials using the microwave synthesis process comprises: the mixed solution of precursor material for the synthesis of inorganic materials, so prepared, is continuously added to a tube-type reactor by a slurry pump, while the reactor is simultaneously subject to microwave energy.

2. The continuous microwave synthesis of inorganic materials and its apparatus according to claim 1, wherein said microwave energy is radiated to the precursor material in the range of 60-1200 watt in output.

3. The continuous microwave synthesis of inorganic materials and its apparatus according to claim 1, wherein the pressure of said reactor is in the range of 1-400 psi.

4. The continuous microwave synthesis of inorganic materials and its apparatus according to claim 1, wherein said inorganic materials are selected from the group consisting of porous molecular sieves with pore structure, two-dimensional layered compounds and ceramics.

5. The continuous microwave synthesis of inorganic materials and its apparatus according to claim 4, wherein said porous molecular sieves with pore structure are selected from the group consisting of the following materials: zeolite with the pore size of 3-15Å selected from alumino silicate, alumino phosphates and silicoalumino phosphate; transition metal-substituted zeolite; and, meso-pore elements of 15-150Å.

6. The continuous microwave synthesis of inorganic materials and its apparatus according to claim 4, wherein 0-20 wt.% of said porous molecular sieves with the crystal seed size of 50-500 µm is added to the total synthetic

7. The continuous microwave synthesis of inorganic materials and its apparatus according to claim 4, wherein said two-dimensional layered compounds are selected from hydrotalcite based layered double hydroxide of bivalent or trivalent metal cation and mixed metal hydroxides derived from them.

8. The continuous microwave synthesis of inorganic materials and its apparatus according to claim 4, wherein said ceramics are selected from the group consisting of the following compound: metal ferrite compounds containing zinc, nickel, manganese and cobalt; spinel oxide; and, perovskite.

9. A continuous microwave synthesis apparatus of inorganic materials, wherein its structure comprises an injection tank of synthetic solution 10, a slurry pump 20 and a microwave reactor 30 equipped with a tube-type reactor 31 and cylindrical reactor 32 and microwave radiation apparatus 33.

10. The continuous microwave synthesis apparatus of inorganic materials according to claim 9, wherein said tube-type reactor 31 has the following characteristics: outer diameter (1/16-1 inch), length (1-50 meters) and Teflon.
